# EUROPEAN PATENT SPECIFICATION

(11) **EP 0 988 440 B1**
(45) Date of publication and mention of the grant of the patent: **16.10.2002**
(21) Application number: 98922480.3
(22) Date of filing: 21.05.1998
(51) Int. Cl.: E21B 37/06, E21B 41/02, E21B 47/00, E21B 43/12

(54) **CONTROL AND MONITORING SYSTEM FOR CHEMICAL TREATMENT OF AN OILFIELD WELL**
SYSTEM ZUR ÜBERWACHUNG UND STEUERUNG FÜR CHEMISCHE BEHANDLUNG EINER ÖLBOHRUNG
SYSTEME DE COMMANDE ET DE SURVEILLANCE DU TRAITEMENT CHIMIQUE D'UN PUITS DE PETROLE

(30) Priority: 09.06.1997 US 48989 P; 10.10.1997 US 62953 P
(43) Date of publication of application: 29.03.2000
(73) Proprietor: BAKER HUGHES INCORPORATED, Houston Texas 77027 (US)
(72) Inventor: JOHNSON, Michael, H., Flower Mound, TX 75028 (US); CLEMMIT, Alan, Kingwood, TX 77345 (US)
(74) Representative: Atkinson, Peter Birch
(86) International application number: US9810517
(87) International publication number: WO98057030

(56) References cited:
- US-A- 4 436 148
- US-A- 4 635 723
- US-A- 4 665 981
- US-A- 5 353 237
- US-A- 5 418 614
- D.F. BROST, F.M. REXACH ET AL: "Optical Methods for Monitoring Treating Chemicals in Oilfield Water Systems" SPE #22781, 6 October 1991, pages 217-232, XP002073200

## Description

### Field of the Invention:

This invention relates generally to oilfield operations and more particularly to monitoring and control of treatment systems for oilfield wells including a surface treatment system which controls and monitors chemical treatments of produced oil and gas and is further directed to a downhole apparatus utilizing sensors and use of same in monitoring the condition of downhole equipment, monitoring certain geological conditions, reservoir monitoring, monitoring and controlling chemical addition and remedial operations.

### Background of the Invention:

In production wells, chemicals are often injected downhole to treat the producing fluids. However, it can be difficult to monitor and control such chemical injection in real-time. US-A-5,418,614 (Brost) describes a sensor for on-line analysis of industrial fluid streams. It is known in the art to dispose sensors in a wellbore to obtain information relating to the efficiency and performance of each producing zone in each of the wellbores. To perform certain types of reservoir analysis, it is required to know the temperature and pressure build rates in the wellbore. This requires measuring temperature and pressure at selected locations downhole over extended time periods after shutting down the well at the surface. US-A-4,665,981 (Hayatdavoudi) describes a process for treating oil from an oilfield well wherein the treatment means is linked to a surface sensor. In other prior art methods, the well is shut down at the surface, a wireline tool is conveyed into the wellbore and positioned at one location in the wellbore. The tool continuously measures temperature and pressure and may provide other measurement, such as flow control. These measurements are then utilized to perform reservoir analysis, which may include determining the extent of the hydrocarbon reserves remaining in a field, flow characteristics of the fluid from the producing formations, water content, etc. The above-described prior art methods do not provide continuous, real-time, measurement while the well is producing and requires special wireline tools that must be conveyed downhole. This information is used to determine the course of action, which may include further opening or closing sliding sleeves to increase or decrease the production rate, remedial work, such as cleaning or reaming operations, shutting down a particular zone, etc. The temperature and pressure measurements are used to continually monitor each production zone and to update reservoir models. To make measurement for determining the temperature and pressure build-up rates, the wellbore is shut down and making of the measurements continues. These prior art methods require transporting wireline tools to the location. which can be very expensive for an offshore wellbore and a wellbore drilled in remote locations.

The present invention addresses the above-described deficiencies of the prior art and provides apparatus and methods which, in a preferred embodiment, utilize fiber optic sensors, wherein each sensor can provide information about more than one parameter to perform a variety of functions. The sensors may be placed along any length of the wellbore. Sensor segments, each segment containing one or more sensors, may be coupled to form a string that may be disposed in the casing for continuous monitoring of the wellbores. Sensors may be distributed in a wellbore or multiple wellbore for determining parameters of interest.

### Summary of the Invention:

According to the present invention there is provided an apparatus for controlling chemical injection of a system for treating production fluids of an oilfield well comprising:
a chemical injecting device injecting one or more chemicals into the production fluids;
at least one sensor associated with the treatment system sensing at least one property of the fluids of the oilfield well; and
a control and monitoring system for controlling, in real-time, the chemical injection device in response, at least in part, to information from the sensor, characterised in that the sensor is at a downhole location.

The present invention broadly contemplates an apparatus for controlling chemical injection of a system for treating production fluids of an oilfield which utilises a chemical injection device for injecting one or more chemicals into the treatment system. The system also includes at least one downhole chemical sensor associated with the treatment system which communicates with a control and monitoring system for controlling, in real-time, the chemical injection device in response, at least in part, to information from the chemical sensor.

The present invention is also directed to an apparatus for controlling chemical injection of a system for treating production fluids of an oilfield well which comprises a chemical injecting device for injecting one or more chemicals into the production fluids at a downhole location. At least one downhole sensor sensing at least one property of the fluids produced at the downhole location is provided along with a control and monitoring system for controlling, in real-time, the chemical injection device in response, at least in part, to information from the downhole sensor. The downhole sensor may be a chemical sensor or any other sensor which is suitable for use with the treatment system of the present invention.

The present invention also contemplates an apparatus for controlling chemical injection of a system for treating production fluids of an oilfield well which includes a chemical injecting device for injecting one or more chemicals into the treatment system and a plurality of downhole sensors associated with and distributed throughout at least a portion of the treatment system. The sensors sense at least one parameter of the fluids from the oilfield well and communicate with a control and monitoring system which controls, in real-time, the chemical injection device in response, at least in part, to information from the plurality of sensors. The chemical injecting device may inject the chemicals into a surface treatment system or into the production fluids at a downhole location.

The present invention utilizes sensors which may be located downhole, or a combination of downhole and uphole sensors and furthermore, the sensors may be provided as a plurality of sensors in a distributed system along the wellbore. Each sensor can be configured to provide multiple measurements and a plurality of spaced apart sensors may be disposed in the wellbore. The sensors may comprise a fiber optic sensor in which a light source and data acquisition and processing unit are preferably disposed downhole. When the sensor of the present invention is a fiber optic sensor, a single light source may be utilized in a multilateral wellbore configuration. The sensors may be permanently installed in the wellbores. Chemical parameters which may be measured by the chemical sensors include but are not limited to specific chemical content, potential ionic content, covalent content, pH level, oxygen levels, and organic levels, and organic precipitates.

The distributed sensors of this invention find particular utility in the monitoring and control of various chemicals which are injected into the well. Such chemicals are needed downhole to address a large number of known problems such as for scale Inhibition and various pretreatments of the fluid being produced. In accordance with the present invention, a chemical injection monitoring and control system includes the placement of one or more sensors downhole in the producing zone for measuring the chemical properties of the produced fluid as well as for measuring other downhole parameters of interest. These sensors are preferably fiber optic based and are formed from a sol gel matrix and provide a high temperature, reliable and relatively inexpensive indicator of the desired chemical parameter. The downhole chemical sensors may be associated with a network of distributed fiber optic sensors positioned along the wallbore for measuring pressure, temperature and/or flow. Surface and/or downhole controllers receive input from the several downhole sensors, and in response thereto, control the injection of chemicals into the borehole. By the sensors communicating with the surface and/or downhole controllers, the effectiveness of a downhole or surface treatment system is monitored in real-time and based on the sensed information, the controllers will initiate some change in the manner, amount, or type of the chemical being injected.

In still another feature of this invention, the control and monitoring system and sensors associated therewith are used in a treatment system which comprises a surface treatment having at least one sensor associated with the surface treatment system. The parameters related to the chemical being used for surface treatment are measured in real-time and on-line and these measured parameters are used to control the dosage of chemicals into the surface treatment system. The surface treatment system utilizes one or more sensors which communicate with a control and monitoring system for controlling, in real-time, a chemical injection device. One or more chemicals are injected into the surface treatment system. When a surface treatment system is used for treating the production fluids from the well, the sensors may be distributed either downhole, uphole, or a combination thereof.

Examples of the more important features of the invention have been summarized rather broadly in order that the detailed description thereof that follows may be better understood, and in order that the contributions to the art may be appreciated. There are, of course, additional features of the invention that will be described hereinafter and which will form the subject of the claims appended hereto.

### Brief Description of the Drawings:

For a detailed understanding of the present invention, reference should be made to the following detailed description of the preferred embodiment, taken in conjunction with the accompanying drawings, in which like elements have been given like numerals, wherein:
FIGURE 1 is a schematic illustration of a chemical injection monitoring and control system utilizing a distributed sensor arrangement and downhole chemical monitoring sensor system in accordance with the present invention;
FIGURE 2 shows a schematic illustration of a chemical injection monitoring and control system utilizing a distributed sensor arrangement wherein the sensors comprise, at least in part, fiber optic sensors according to one embodiment of the present invention;
FIGURE 3 is a schematic illustration of a chemical injection monitoring and control system of one embodiment of the present invention;
FIGURE 4 is a schematic illustration of a fiber optic sensor system for monitoring chemical properties of produced fluids;
FIGURE 5 is a schematic illustration of a fiber optic sol gel indicator probe for use with the sensor system of FIGURE 4;
FIGURE 6 is a schematic illustration of a surface treatment system in accordance with the present invention; and
FIGURE 7 is a schematic of a control and monitoring system for the surface treatment system of FIGURE 6.

### Detailed Description of Preferred Embodiments:

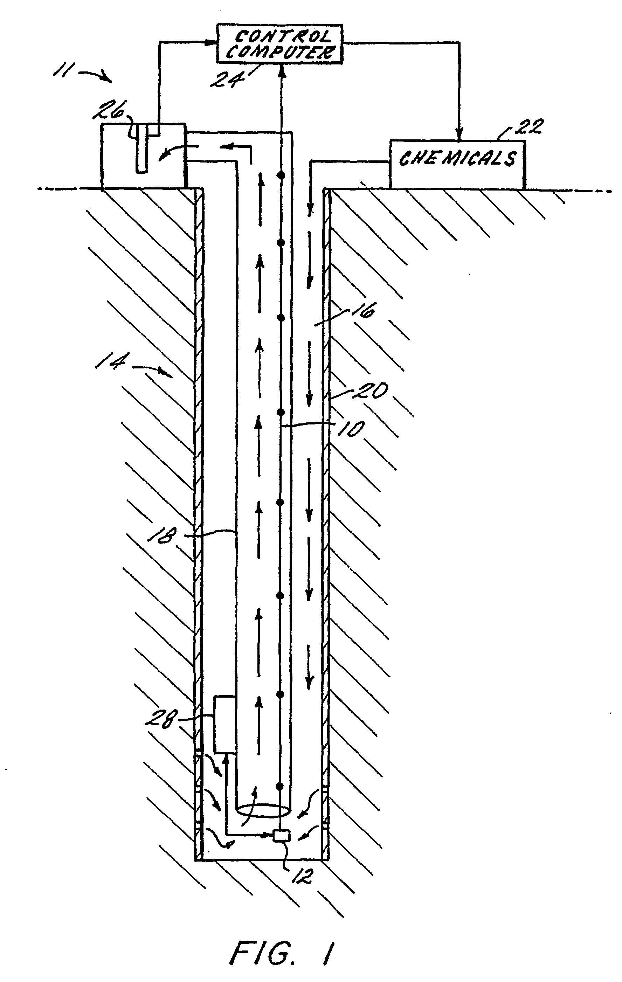

The concepts and applications of the present invention will first be described in reference to FIGURE 1, which shows schematic illustrations of a real-time chemical injection monitoring and control system utilizing a distributed sensor arrangement and a downhole monitoring sensor system in accordance with one embodiment of the present invention. The sensors may be disposed in many other ways within the concepts disclosed herein.

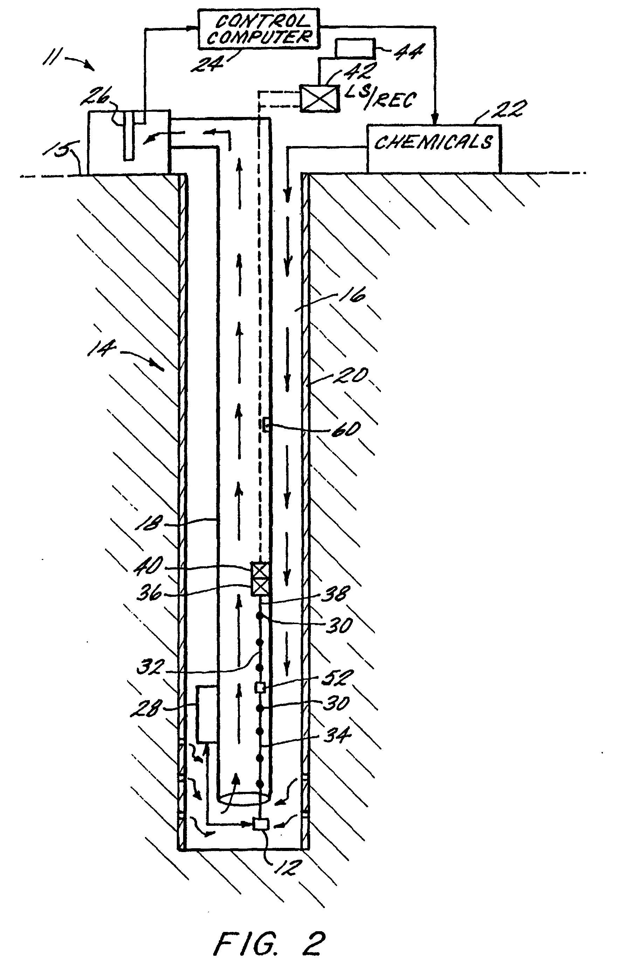

Referring now to FIGURE 1, a distributed sensor system 10 and downhole sensor 12 is provided and is particularly suitable for use in a production well 11 where chemicals are being injected therein and there is a resultant need for the monitoring of such a chemical injection process so as to optimize the use and effect of the injected chemicals. Chemicals often need to be pumped down a production well 11 for inhibiting scale, paraffins and the like and for other known processing applications and pretreatment of the fluids being produced. Chemicals are also introduced downhole to act as emulsion breakers. Often, as shown in FIGURE 2, chemicals are introduced in an annulus 16 between the production tubing 18 and the casing 20 of well 11. Chemicals may also be introduced in a capillary (not shown), the use of which is known in the art. The chemical injection (shown schematically at 22) can be accomplished in a variety of known methods such as in connection with a submersible pump (as shown for example in U.S. Patent 4,582,131, assigned to the assignee hereof and incorporated herein by reference) or through an auxiliary line associated with a cable used with an electrical submersible pump (such as shown for example in U.S. Patent 5,528,824, assigned to the assignee hereof and incorporated herein by reference).

In accordance with an embodiment of the present invention, one or more downhole or bottomhole sensors 12 are located in the producing zone for sensing a variety of parameters associated with the producing fluid andlor interaction of the injected chemical and the producing fluid. Thus, the bottomhole sensors 12 will sense parameters relative to the chemical properties of the produced fluid such as the potential ionic content, specific chemical content, the covalent content, pH level, oxygen levels, organic precipitates and like measurements. Sensors 12 can also measure physical properties associated with the producing fluid and/or the interaction of the injected chemicals and producing fluid such as the oil/water cut, viscosity and percent solids. Sensors 12 can also provide information related to paraffin, corrosion and scale build-up, H₂S content, Hydrate content, asphaltene dispersants, biocides, demulsifiers and the like. Sensors 12 may include sensors for determining resistivity of fluids and formations, gamma ray sensors and hydrophones. The measurements from sensors 12 and from a plurality of distributed sensors 10 which are positioned along at least a portion of the wellbore 14 (e.g., preferably the interior of the production tubing 18) are combined to determine various conditions downhole. For example, flow measurements from production zones and the resistivity measurements may be combined to determine water saturation or to determine the oil, gas, and water content.

In one mode, sensors 12 are permanently installed in the wellbore 14 at selected locations. In a producing wellbore 14, sensors 12 continuously or periodically (as programmed) provide in real-time the pressure and/or temperature andlor fluid flow measurements. Such measurements are preferably made for each producing zone in each of the wellbore 14. To perform certain types of reservoir analysis, it is required to know the temperature and pressure build rates in the wellbore 14. This requires measuring temperature and pressure at selected locations downhole over extended time periods after shutting down the well 11 at the surface. In the prior art methods, the well 11 is shut down at the surface, a wireline tool (not shown) is conveyed into the wellbore 14 and positioned at one location in the wellbore 14. The tool continuously measures temperature and pressure and may provide other measurement, such as flow control. These measurements are then utilized to perform reservoir analysis, which may include determining the extent of the hydrocarbon reserves remaining in a field, flow characteristics of the fluid from the producing formations, water content, etc. The above-described prior art methods do not provide continuous, real-time, measurement while the well 11 is producing and requires special wireline tools that must be conveyed downhole. The present invention, on the other hand, provides in-situ measurements while the wellbore 14 is producing. The fluid flow information from each zone is used to determine the effectiveness of each producing zone. Decreasing flow rates over time indicate problems with the flow control devices, such as screens and sliding sleeves, or clogging of the perforations and rock matrix near the wellbore 14. This information is used to determine the course of action, which may include further opening or closing sliding sleeves to increase or decrease the production rate, remedial work, such as cleaning or reaming operations, shutting down a particular zone, etc. The temperature and pressure measurements are used to continually monitor each production zone and to update reservoir models. To make measurement for determining the temperature and pressure build-up rates, the wellbore 14 is shut down and making of the measurements continues. This does not require transporting wireline tools to the location, which can be very expensive for an offshore wellbore 14 and a wellbore 14 drilled in remote locations. Further, in-situ measurements and computed data can be communicated to a central office or to the offices of log and reservoir engineers via satellite. This continuous monitoring of each wellbore 14 allows taking relatively quick action, which can significantly improve the hydrocarbon production and the life of the wellbore 14. The above-described measurements may also be taken for nonproducing zones to aid in reservoir modeling, to determine the effect of production from various wellbore 14 on the field in which the wellbore 14 is drilled. While the present invention has hereinbefore been described with reference to a single wellbore 14, it is understood that it is within the scope of the invention that the apparatus and method of the present invention may be used in an oilfield setting wherein a plurality of wellbores 14 are present.

The present invention is also preferably associated with a surface control and monitoring system 24 and one or more known surface sensors 26 for sensing parameters related to the produced fluid; and more particularly for sensing and monitoring the effectiveness of treatment rendered by the injected chemicals. The sensors 26 associated with surface system 24 can sense parameters related to the content and amount of, for example, hydrogen sulfide, hydrates, paraffins, water, solids and gas.

Preferably, the production well 11 disclosed in FIGURE 2 has associated therewith a so-called "intelligent" downhole control and monitoring system which may include a downhole computerized controller 28 and/or the aforementioned surface control and monitoring system 24. This control and monitoring system 28 is of the type disclosed in Patent 5,597,042, which is assigned to the assignee hereof and fully incorporated herein by reference. As disclosed in Patent 5,597,042, the sensors in the "intelligent" production wells of this type are associated with downhole computer and/or surface controllers which receive information from the sensors and based on this information, initiate some type of control for enhancing or optimizing the efficiency of production of the well 11 or in some other way effecting the production of fluids from the formation. In the present invention, the surface and/or downhole computers 24, 28 will monitor the effectiveness of the treatment of the injected chemicals and based on the sensed information, the control computer will initiate some change in the manner, amount or type of chemical being injected. For example, if sensor 10 and/or 12 indicate that the pH level is not within a desired range, this information is communicated with the surface and/or downhole computers 24, 28 and chemical injection device 22 injects one or more chemicals in response, at least in part, to information from the sensors 10 and/or 12. In the system of the present invention, the sensors 10 and 12 may be connected remotely or in-situ.

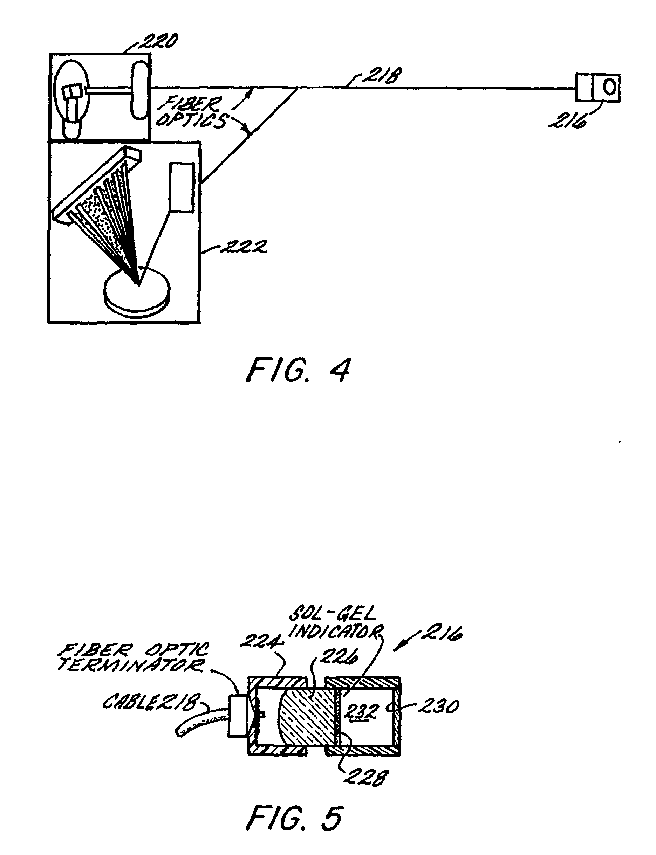

In a preferred embodiment of the present invention, the bottomhole sensors 12 comprise chemical sensors and more particularly fiber optic chemical sensors. Such fiber optic chemical sensors preferably utilize fiber optic probes which are used as a sample interface to allow light from the fiber optic to interact with the liquid or gas stream and return to a spectrometer for measurement. The probes are typically composed of sol gel indicators. Sol gel indicators allow for on-line, real-time measurement and control through the use of indicator materials trapped in a porous, sol get derived, glass matrix. Thin films of this material are coated onto optical components of various probe designs to create sensors for process and environmental measurements. These probes provide increased sensitivity to chemical species based upon characteristics of the specific indicator. For example, sol gel probes can measure with great accuracy the pH of a material and sol gel probes can also measure for specific chemical content. The sol gel matrix is porous, and the size of the pores is determined by how the glass is prepared. The sol gel process can be controlled so as to create a sol gel indicator composite with pores small enough to trap an indicator in the matrix but large enough to allow ions of a particular chemical of interest to pass freely in and out and react with the indicator. An example of suitable sol gel indicator for use in the present invention is shown and described with reference to FIGURES 4 and 5.

The concepts and applications of one embodiment of the present invention will be described in reference to FIGURE 2, which shows schematic illustrations of placement and use of fiber optic and other sensors 30 according to certain embodiments of the present invention. The sensors 30 may be disposed in many other ways within the concepts discloses herein.

One or more fiber optic sensors 30 are utilized, wherein each such sensor 30 may be operated in one, or more than one mode, each mode providing a measurement of a different parameter of interest. For example, the same fiber optic sensor 30 may be configured to provide one or more measurements selected from a group consisting of downhole temperature, downhole pressure, fluid flow and acoustic signals. To obtain multiple measurements from the same fiber optic sensor 30, the sensor 30 is configured to operate in multiple modes, which can be selectively activated during operations, thereby obtaining multiple measurements. One such fiber optic sensor 30 is commercially available from CIDRA of Wallingford, Connecticut.

FIGURE 2 shows exemplary main wellbore 14 formed from the earth surface 13. For the purposes of illustration, the wellbore 14 herein is shown drilled from land, however, this invention is equally applicable to offshore wellbores (not shown). It should be noted that all wellbore 14 configurations shown and described herein are to illustrate the present invention and shall not be construed to limit the inventions claimed herein.

In one application, a number of fiber optic sensors 30 are placed in the wellbore 14. A single or a plurality of fiber optic strings or segments, each such segment containing a plurality of spaced apart fiber optic sensors 30 may be used so as to install the desired number of fiber optic sensors 30 in the wellbore 14. As an example, FIGURE 2 shows two serially coupled segments 32 and 34, each containing a plurality of spaced apart fiber optic sensors 30. A light source and detector (LS/D) 36 coupled to an end 38 of the segment 32 is disposed in the wellbore 14 to transmit light energy to the sensors 30 and to receive the reflected light energy from the sensors 30. A data acquisition and processing unit (DA) 40 is disposed downhole to control the operation of the sensors 30, process downhole sensor signals and data, and to communicate with other equipment and devices, including devices in the wellbore 14 or at the surface (not shown). Alternatively, a light source 42 and the data acquisition and processing unit 44 may be placed on the surface 15. Similarly, fiber optic sensor sensors 30 may be disposed in other wellbores that are present in the oilfield. Alternatively, multiple light sources and data acquisition units may be used downhole, at the surface or in combination. Since the same sensor may make different types of measurements, the data acquisition unit 40 or 44 is programmed to multiplex the measurement. Multiplexing techniques are known in the art and are thus not described in detail herein. The data acquisition unit 40 may be programmed to control the downhole sensors 30 autonomously or upon receiving command signals from the surface or a combination of these methods.

The sensors 30 may be installed in the wellbore 12 before or after installing casings in the wellbore, such as casing 20 shown installed in the wellbore 14. This may be accomplished by connecting the strings 32 and 34 along the inside of the casing 20. In such a method, the strings 32 and 34are preferable connected end-to-end at the surface to ensure proper connections of the couplings 52. The fiber optic sensors 30 and/or strings 32 and 34 may be deployed or installed by robotics devices (not shown) which are known in the art. Alternatively, the fiber optic sensors 30 may be placed in the casing 20 at the surface while individual casing sections (which are typically about forty-feet long) are joined prior to conveying the casing sections into the boreholes. Stabbing techniques for joining casing or tubing sections and known in the art are preferred over rotational joints because stabbing generally provides better alignment of the end couplings 52 and also because it allows operators to test and inspect optical connections between segments for proper two-way transmission of light energy through the entire string 32, 34.

Thus, in the system described in FIGURE 2, a plurality of fiber optic sensors 30 are installed spaced apart in one or more wellbores, such as wellbore 14. If desired, each fiber optic sensor 30 can operate in more than one mode to provide a number of different measurements. The light source 36, and data detection and acquisition system 40 are preferably placed downhole. Although each fiber optic sensor 30 provides measurements for multiple parameters, it is relatively small compared to individual commonly used single measurement sensors, such as pressure sensors, strain gauges, temperature sensors, flow measurement devices and acoustic sensors, which enables making a large number of different types of measurements utilizing relatively small downhole space. Installing data acquisition and processing devices or units 40 downhole allows making a large number of data computations and processing downhole, avoiding the need for transmitting large amounts of data to the surface. Installing the light source 36 downhole allows locating the source 36 close to the sensors 30, which avoids transmitting light to great distances from the surface 15. The data from the downhole acquisition system 40 may be transmitted to the surface by any suitable method including wire connections, electromagnetic telemetry and acoustic methods. Still, in some applications, it may be desirable to locate the light source 36 and/or the data acquisition and processing system 44 at the surface. Also, in some case, it may be more advantageous to partially process data downhole and partially at the surface.

Referring to FIGURES 1 and 2, any number of other sensors, generally denoted herein by numeral 60 may be disposed in wellbore 14. Such sensors 60 may include sensors for determining resistivity of fluids and formations, gamma ray sensors and hydrophones. The measurements from the fiber optic sensors 30 and sensors 60 are combined to determine the various conditions downhole.

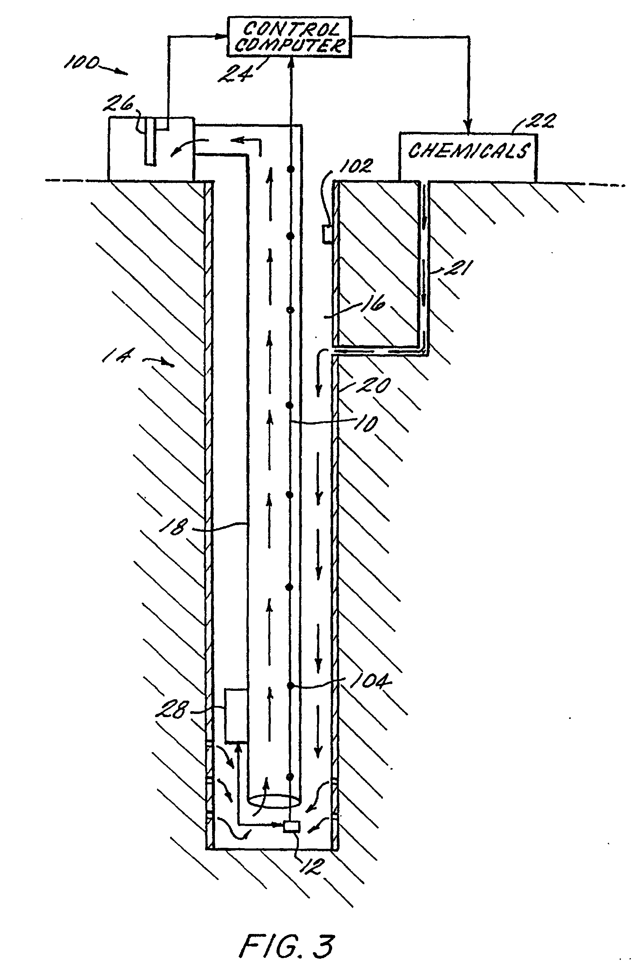

Referring to FIGURE 3 which illustrates an additional feature of the present invention and comprises a treatment system 100 having the plurality of distributed sensors 10 positioned along at least a portion of the wellbore 14 so that at least one distributed sensor 102 is located upstream from chemical injector 22 and at least one distributed sensor 104 is located downstream from the point of chemical addition at chemical injector 22. The point of chemical addition may be positioned at a location along the wellbore 14 as illustrated in FIGURE 3, it being understood that the positioning of the point of chemical addition by the chemical injector 22 in FIGURE 3 is for illustration and not limitation. Chemicals are introduced into the wellbore 14 by means of an injection duct 21 or by other suitable means known in the art.

Referring to FIGURES 4 and 5, a probe is shown at 216 connected to a fiber optic cable 218 which is in turn connected both to a light source 220 and a spectrometer 222. As shown in FIGURE 5, probe 216 includes a sensor housing 224 connected to a lens 226. Lens 226 has a sol gel coating 228 thereon which is tailored to measure a specific downhole parameter such as pH or is selected to detect the presence, absence or amount of a particular chemical such as oxygen, H₂S or the like. Attached to and spaced from lens 226 is a mirror 230. During use, light from the fiber optic cable 218 is collimated by lens 226 whereupon the light passes through the sol gel coating 228 and sample space 232. The light is then reflected by mirror 230 and returned to the fiber optical cable. Light transmitted by the fiber optic cable is measured by the spectrometer 222. Spectrometer 222 (as well as light source 220) may be located either at the surface or at some location downhole. Based on the spectrometer measurements, a control computer 214, 216 will analyze the measurement and based on this analysis, the chemical injection apparatus 208 will change the amount (dosage and concentration), rate or type of chemical being injected downhole into the well. Information from the chemical injection apparatus relating to amount of chemical left in storage, chemical quality level and the like will also be sent to the control computers. The control computer may also base its control decision on input received from surface sensor 215 relating to the effectiveness of the chemical treatment on the produced fluid, the presence and concentration of any impurities or undesired by-products and the like.

Referring again to FIGURES 1 and 2, in addition to the bottomhole sensors 12 being comprised of the fiber optic sol gel type sensors, the distributed sensors 10 along production tubing 18 may also include the fiber optic chemical sensors 30 (sol gel indicators) of the type discussed above. In this way, the chemical content of the production fluid may be monitored as it travels up the production tubing 18 if that is desirable.

The permanent placement of the sensors 10, 12 and control system 28 downhole in the well leads to a significant advance in the field and allows for real-time, remote control of chemical injections into a well without the need for wireline device or other well interventions.

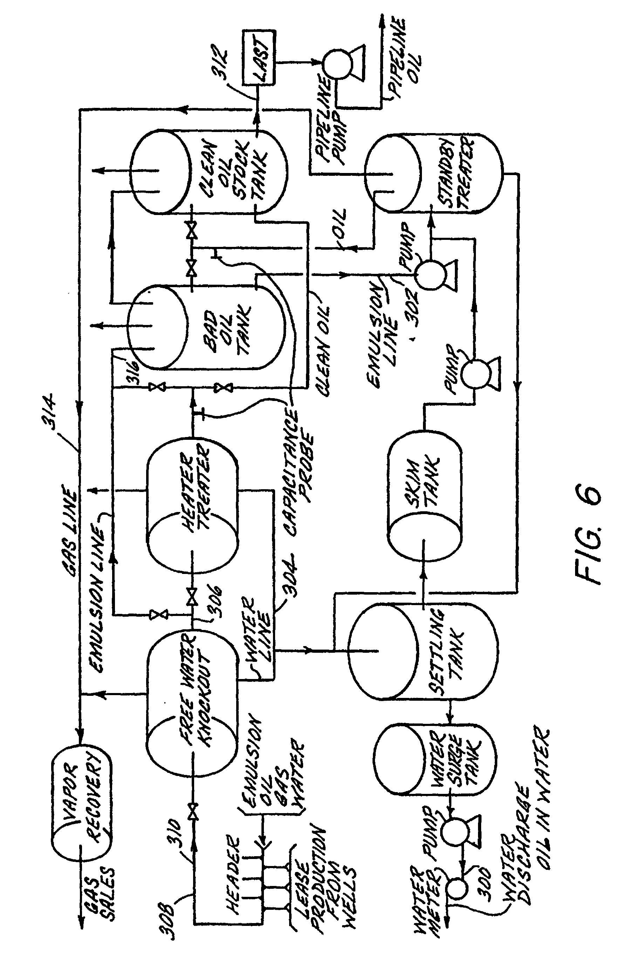

In accordance with another embodiment of the present invention, a novel control and monitoring system is provided for use in connection with a treating system for handling produced hydrocarbons in an oilfield. Referring to FIGURE 6, a typical surface treatment system used for treating produced fluid in oil fields is shown. As is well known, the fluid produced from the well includes a combination of emulsion, oil, gas and water. After these well fluids are produced to the surface, they are contained in a pipeline known as a "flow line". The flow line can range in length from a few feet to several thousand feet. Typically, the flow line is connected directly into a series of tanks and treatment devices which are intended to provide separation of the water in emulsion from the oil and gas. In addition, it is intended that the oil and gas be separated for transport to the refinery.

The produced fluids flowing in the flow line and the various separation techniques which act on these produced fluids lead to serious corrosion problems. Presently, measurement of the rate of corrosion on the various metal components of the treatment systems such as the piping and tanks is accomplished by a number of sensor techniques including weight loss coupons, electrical resistance probes, electrochemical - linear polarization techniques, electrochemical noise techniques and AC impedance techniques. While these sensors are useful in measuring the corrosion rate of a metal vessel or pipework, these sensors do not provide any information relative to the chemicals themselves, that is the concentration, characterization or other parameters of chemicals introduced into the treatment system. These chemicals are introduced for a variety of reasons including corrosion inhibition and emulsion breakdown, as well as scale, wax, asphaltene, bacteria and hydrate control.

In accordance with an important feature of the present invention, sensors are used in chemical treatment systems of the type disclosed in FIGURE 6 which monitors the chemicals themselves as opposed to the effects of the chemicals (for example, the rate of corrosion). Such sensors provide the operator of the treatment system with a real-time understanding of the amount of chemical being introduced, the transport of that chemical throughout the system, the concentration of the chemical in the system and like parameters. Examples of suitable sensors which may be used to detect parameters relating to the chemicals traveling through the treatment system include a chemical sensor, such as the fiber optic sensor described above with reference to FIGURES 4 and 5, as well as other known sensors such as those sensors based on a variety of technologies including ultrasonic absorption and reflection, laser-heated cavity spectroscopy (LIMS), X-ray fluorescence spectroscopy, neutron activation spectroscopy, pressure measurement, microwave or millimeter wave radar reflectance or absorption, and other optical and acoustic (i.e., ultrasonic or sonar) methods. A suitable microwave sensor for sensing moisture and other constituents in the solid and liquid phase influent and effluent streams is described in U.S. Patent No. 5,455,516, all of the contents of which are incorporated herein by reference. An example of a suitable apparatus for sensing using LIBS is disclosed in U.S. Patent No. 5,379,103 all of the contents of which are incorporated herein by reference. An example of a suitable apparatus for sensing LIMS is the LASMA Laser Mass Analyzer available from Advanced Power Technologies, Inc. of Washington, D.C. An example of a suitable ultrasonic sensor is disclosed in U. S. Patent 5,148,700 (all of the contents of which are incorporated herein by reference). A suitable commercially available acoustic sensor is sold by Entech Design, Inc., of Denton, Texas under the trademark MAPS®. Preferably, the sensor is operated at a multiplicity of frequencies and signal strengths. Suitable millimeter wave radar techniques used in conjunction with the present invention are described in chapter 15 of Principles and Applications of Millimeter Wave Radar, edited by N.C. Currie and C.E. Brown, Artecn House, Norwood, MA 1987. The ultrasonic technology referenced above can be logically extended to millimeter wave devices.

While the sensors may be utilized in a system such as shown in FIGURE 6 at a variety of locations, the arrows numbered 300, through 316 indicate those positions where information relative to the chemical introduction would be especially useful.

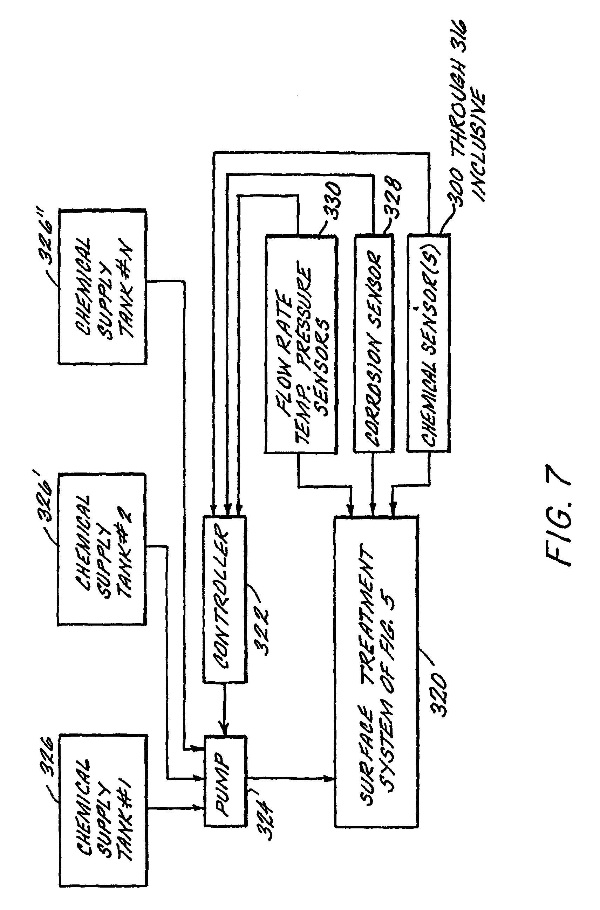

Referring now to FIGURE 7, the surface treatment system of FIGURE 6 is shown generally at 320. In accordance with the present invention, the chemical sensors (i.e. 300 - 316) will sense, in real-time, parameters (i.e., concentration and classification) related to the introduced chemicals and supply that sensed information to a controller 322 (preferably a computer or microprocessor based controller). Based on that sensed information monitored by controller 322, the controller will instruct a pump or other metering device 324 to maintain, vary or otherwise alter the amount of chemical and/or type of chemical being added to the surface treatment system 320. The supplied chemical from tanks 326, 326N and 3260 can, of course, comprise any suitable treatment chemical such as those chemicals used to treat corrosion, break down emulsions, etc. Examples of suitable corrosion inhibitors include long chain amines or aminidiazolines. Suitable commercially available chemicals include Cronox™ which is a corrosion inhibitor sold by Baker Petrolite, a division of Baker-Hughes, Incorporated, of Houston, Texas.

Thus, in accordance with the control and monitoring system of FIGURE 7, based on information provided by the chemical sensors 300 - 316, real-time corrective measures can be taken for varying the injection of the chemical (corrosion inhibitor, emulsion breakers, etc.) into the system. The injection point of these chemicals could be anywhere upstream of the location being sensed such as the location where the corrosion is being sensed. Of course, this injection point could include injections downhole. In the context of a corrosion inhibitor, the inhibitors work by forming a protective film on the metal and thereby prevent water and corrosive gases from corroding the metal surface. Other surface treatment chemicals include emulsion breakers which break the emulsion and facilitate water removal. In addition to removing or breaking emulsions, chemicals are also introduced to break out and/or remove solids, wax, etc. Typically, chemicals are introduced so as to provide what is known as a base sediment and water (B.S. and W.) of less than 1%.

In addition to the parameters relating to the chemical introduction being sensed by chemical sensors 300 - 316, the monitoring and control system of the present invention can also utilize known corrosion measurement devices as well including flow rate, temperature and pressure sensors. These other sensors are schematically shown in FIGURE 7 at 328 and 330. The present invention thus provides in one embodiment a means for measuring parameters related to the introduction of chemicals into the system in real-time and on line. As mentioned, these parameters include chemical concentrations and may also include such chemical properties as potential ionic content, the covalent content, pH level, oxygen levels, organic precipitates and like measurements. Similarly, oil/water cut viscosity and percent solids can be measured as well as paraffin and scale build-up, H₂S content and the like.

## Claims

1. An apparatus for controlling chemical injection of a system (100,320) for treating production fluids of an oilfield well (14) comprising:
a chemical injecting device (22) injecting one or more chemicals into the production fluids;
at least one sensor (10,12,30) associated with the treatment system (100,320) sensing at least one property of the fluids of the oilfield well (14); and
a control and monitoring system (24,322) for controlling, in real-time, the chemical injection device (22) in response, at least in part, to information from the sensor (10,12,30), **characterised in that** the sensor (10,12,30) is at a downhole location.

2. The apparatus of claim 1, wherein the one or more chemicals are injected at a downhole location.

3. The apparatus of claim 1 or 2, wherein
the control and monitoring systems (24,322) comprises a monitoring system (24,322) positioned at the surface, monitoring the effect of the treatment by the injected chemicals on the produced fluids, and a control system receiving input from the monitoring system.

4. The apparatus of any one of the preceding claims, wherein the treatment system comprises:
a surface treatment system (100,320) for the oilfield well (14).

5. The apparatus of claim 4, wherein
the chemical injecting device (22) injects one or more chemicals into the surface treatment system (100,320) for the treatment of fluids produced from an oilfield well (14).

6. The apparatus of claim 4 or 5, including:
at least one additional sensor (26) distributed in the surface treatment system (100,320) for measuring at least one of pressure, temperature and flow, the additional sensor communicating with the control and monitoring system (24,322).

7. The apparatus of claim 6, wherein
the additional sensor (26) comprises at least one fibre optic sensor.

8. The apparatus of any one of the preceding claims, wherein
the downhole sensor (10,12,30) is a chemical sensor for sensing at least one chemical property of the fluids produced from the well (14).

9. The apparatus of claim 8, including:
a plurality of said chemical sensors, (10,12,30) being distributed downhole along a portion of the length of the well (14).

10. The apparatus of claim 9, wherein
the distributed sensors comprise fibre optic sensors (30).

11. The apparatus of claim 10, wherein
the fibre optic sensors (30) have a probe which is sensitive to at least one selected chemically related property and the probe includes a sol gel sensor (244,226,228,230,232).

12. The apparatus of claim 11, wherein
the downhole sensor (10,12,30) senses a parameter selected from the group consisting of oxygen levels, pH level, organic precipitate content, specific chemical content, covalent content, potential ionic content, oil/water cut, viscosity, paraffin build-up, scale build-up, H₂S content, hydrate content, corrosion build-up, demulsifier content, asphaltene content, and biocides content.

13. A method of monitoring and controlling chemical injection into a system for treating production fluids from an oilfield using the apparatus of claim 1.

## Patentansprüche

1. Vorrichtung zur Steuerung der chemischen Einspritzung eines Systems (100, 320) zur Behandlung von Produktionsfluids einer Erdölfeldbohrung (14), die aufweist:
eine chemische Einspritzvorrichtung (22), die eine oder mehrere Chemikalien in die Produktionsfluids einspritzt;
mindestens einen Meßfühler (10, 12, 30) in Verbindung mit dem Behandlungssystem (100, 320), der mindestens eine Eigenschaft der Fluids der Erdölfeldbohrung (14) mißt; und
ein Steuer- und Überwachungssystem (24, 322) für das Steuern der chemischen Einspritzvorrichtung (22) in Echtzeit als Reaktion, zumindestens teilweise, auf eine Information vom Meßfühler (10, 12, 30), **dadurch gekennzeichnet, daß** sich der Meßfühler (10, 12, 30) an einer Stelle im Bohrloch befindet.

2. Vorrichtung nach Anspruch 1, bei der die eine oder mehrere Chemikalien an eine Stelle im Bohrloch eingespritzt wird.

3. Vorrichtung nach Anspruch 1 oder 2, bei der das Steuer- und Überwachungssystem (24, 322) aufweist: ein Überwachungssystem (24, 322), das auf der Oberfläche angeordnet ist, das den Einfluß der Behandlung durch die eingespritzten Chemikalien auf die erzeugten Fluids überwacht; und ein Steuersystem, das die Eingabe vom Überwachungssystem empfängt.

4. Vorrichtung nach einem der vorhergehenden Ansprüche, bei der das Behandlungssystem ein Oberflächenbehandlungssystem (100, 320) für die Erdölfeldbohrung (14) aufweist.

5. Vorrichtung nach Anspruch 4, bei der die chemische Einspritzvorrichtung (22) eine oder mehrere Chemikalien in das Oberflächenbehandlungssystem (100, 320) für die Behandlung der Fluids einspritzt, die von einer Erdölfeldbohrung (14) erzeugt werden.

6. Vorrichtung nach Anspruch 4 oder 5, die zumindestens einen zusätzlichen Meßfühler (26), der im Oberflächenbehandlungssystem (100, 320) verteilt ist, für das Messen von mindestens einem von Druck, Temperatur und Fluß umfaßt, wobei der zusätzliche Meßfühler mit dem Steuer- und Überwachungssystem (24, 322) in Verbindung steht.

7. Vorrichtung nach Anspruch 6, bei der der zusätzliche Meßfühler (26) mindestens einen faseroptischen Meßfühler aufweist.

8. Vorrichtung nach einem der vorhergehenden Ansprüche, bei der der Bohrlochmeßfühler (10, 12, 30) ein chemischer Meßfühler für das Messen mindestens einer chemischen Eigenschaft der Fluids ist, die vom Bohrloch (14) erzeugt werden.

9. Vorrichtung nach Anspruch 8, die eine Vielzahl der chemischen Meßfühler (10, 12, 30) umfaßt, die im Bohrloch längs eines Abschnittes der Länge des Bohrloches (14) verteilt werden.

10. Vorrichtung nach Anspruch 9, bei der die verteilten Meßfühler faseroptische Meßfühler (30) aufweisen.

11. Vorrichtung nach Anspruch 10, bei der die faseroptischen Meßfühler (30) eine Prüfsonde aufweisen, die auf mindestens eine ausgewählte chemisch in Beziehung stehende Eigenschaft anspricht, und bei der die Prüfsonde einen Sol-Gel-Meßfühler (244, 226, 228, 230, 232) umfaßt.

12. Vorrichtung nach Anspruch 11, bei der der Bohrlochmeßfühler (10, 12, 30) einen Parameter mißt, der aus der Gruppe ausgewählt wird, die besteht aus: Sauerstoffniveaus; pH-Niveau; Gehalt an organischer Fällung; spezifischer Chemikaliengehalt; Kovalenzgehalt; potentieller lonengehalt; Erdöl/Wasser-Fraktion; Viskosität; Paraffinaufbau; Ablagerungsaufbau; H₂S-Gehalt; Hydratgehalt; Korrosionsaufbau; Demulgatorgehalt; Asphaltengehalt; und Biozidgehalt.

13. Verfahren zum Überwachen und Steuern der chemischen Einspritzung in ein System für die Behandlung von Produktionsfluids von einem Erdölfeld bei Verwendung der Vorrichtung aus Anspruch 1.

## Revendications

1. Dispositif de commande de l'injection d'agents chimiques d'un système (100, 320) destine à traiter les fluides de production d'un puits de pétrole (14), comprenant:
un dispositif d'injection d'agents chimiques (22) pour injecter un ou plusieurs agents chimiques dans les fluides de production ;
au moins un capteur (10, 12, 30), associé au système de traitement (100, 320) détectant au moins une propriété des fluides du puits de pétrole (14) ; et
un système de commande et de surveillance (24, 322) destiné à assurer la commande en temps réel du dispositif d'injection chimique (22), au moins en partie en réponse à des informations fournies par le capteur (10, 12, 30), **caractérisé en ce que** le capteur (10, 12, 30) est agencé au niveau d'un emplacement du fond.

2. Dispositif selon la revendication 1, dans lequel un ou plusieurs produits chimiques sont injectés au niveau d'un emplacement du fond.

3. Dispositif selon les revendications 1 ou 2, dans lequel le système de commande et de surveillance (24, 322) comprend un système de surveillance (24, 322) positionné au niveau de la surface, pour surveiller l'effet du traitement exercé par les agents chimiques injectés sur les fluides de production et un système de commande recevant les signaux du système de surveillance.

4. Dispositif selon l'une quelconque des revendications précédentes, dans lequel le système de traitement comprend un système de traitement de surface (100, 320) pour le puits de pétrole (14).

5. Dispositif selon la revendication 4, dans lequel le système d'injection chimique (22) injecte un ou plusieurs produits chimiques dans le système de traitement de surface (100, 320) en vue du traitement des fluides produits par un puits de pétrole (14).

6. Dispositif selon les revendications 4 ou 5, englobant au moins un capteur additionnel (26) agencé dans le système de traitement de surface (100, 320) pour mesurer au moins la pression, la température ou l'écoulement, le capteur additionnel communiquant avec le système de commande et de surveillance (24, 322).

7. Dispositif selon la revendication 6, dans lequel le capteur additionnel (26) comprend au moins un capteur à fibres optiques.

8. Dispositif selon l'une quelconque des revendications précédentes, dans lequel le capteur de fond (10, 12, 30) et un capteur chimique destiné à détecter au moins une propriété chimique des fluides produits par le puits (14).

9. Dispositif selon la revendication 8, englobant plusieurs desdits capteurs chimiques (10, 12, 30) répartis au fond, le long d'une partie de la longueur du puits (14).

10. Dispositif selon la revendication 9, dans lequel les capteurs répartis sont des capteurs à fibres optiques (30).

11. Dispositif selon la revendication 10, dans lequel les capteurs à fibres optiques (30) comportent une sonde sensible à au moins une propriété chimique associée sélectionnée, la sonde englobant un capteur sol-gel (244, 226, 228, 230, 232).

12. Dispositif selon la revendication 11, dans lequel le capteur de fond (10, 12, 30) détecte un paramètre sélectionné parmi le groupe constitué des niveaux d'oxygène, du niveau pH, de la teneur en précipités organiques, de la teneur en agents chimiques spécifiques, de la teneur en liaisons covalentes, de la teneur ionique potentielle, de la teneur en huile/eau, de la viscosité, de l'accumulation de paraffine, de l'accumulation de tartre, de la teneur en H₂S, de la teneur en hydrates, de l'accumulation de la corrosion, de la teneur en agents désémulsifiants, de la teneur en asphaltènes et de la teneur en biocides.

13. Procédé de surveillance et de commande de l'injection d'agents chimiques dans un système destiné au traitement des fluides de production d'un champ pétrolifère par l'intermédiaire du dispositif selon la revendication 1.
